# FASCICULE DE BREVET EUROPEEN

(11) **EP 2 415 291 B1**
(45) Date de publication et mention de la délivrance du brevet: **11.03.2020**
(21) Numéro de dépôt: 10716567.2
(22) Date de dépôt: 22.03.2010
(51) Int. Cl.: H04W 8/22

(54) **PROCEDE DE NEGOCIATION POUR LA DELIVRANCE D'UN SERVICE A UN TERMINAL**
AUSHANDLUNGSVERFAHREN ZUM BEREITSTELLEN EINES DIENSTES FÜR EIN ENDGERÄT
NEGOTIATION METHOD FOR PROVIDING A SERVICE TO A TERMINAL

(30) Priorité: 30.03.2009 FR 0951988
(43) Date de publication de la demande: 08.02.2012
(73) Titulaire: Orange, 75015 Paris (FR)
(72) Inventeur: MEURISSE, Jean-Sébastien, F-22700 Louannec (FR)
(86) Numéro de dépôt international: PCT/FR2010/050513
(87) Numéro de publication internationale: WO 2010/112729

(56) Documents cités:
- EP-A- 1 724 984
- WO-A-02/43422
- GB-A- 2 434 721
- US-A1- 2004 203 759
- US-A1- 2006 100 881

## Description

L'invention concerne un procédé de négociation pour la délivrance d'un service à un terminal, un serveur l'utilisant, un procédé de configuration d'un terminal, et un terminal l'utilisant. En particulier, l'invention concerne les interfaces d'interaction avec des services à disposition des utilisateurs d'un service.

Dans le domaine des interfaces actuelles, deux tendances différentes se dessinent

D'une part, des interfaces riches et évoluées sont développées reposant sur la connaissance précise du terminal accédant au service. Ce sont des environnements dits "fermés". C'est le cas par exemple des services ou applications dédiées à l'iPhone, des offres de télévision basées sur des récepteurs ou box parfaitement connus, etc.

Cette première approche impose, en particulier, aux utilisateurs d'investir dans une solution complète et souvent propriétaire.

D'autre part, à l'inverse, dans une volonté de rendre universel l'accès aux ressources de l'Internet, sont nés des navigateurs Internet. Ce sont des environnements dits "ouverts". De façon à être accessible d'un très grand nombre de terminaux, ces navigateurs sont restés très indépendants des capacités du terminal, puisqu'il suffit d'un dispositif de pointage (une souris notamment) pour utiliser un navigateur.

Cette deuxième approche, de part sa tentative de généricité, s'adapte mal à la diversité grandissante des types de terminaux permettant d'accéder à un service aboutissant à une sous utilisation des capacités du terminal ou au contraire à la non prise en compte de ses limitations.

En outre cette deuxième approche s'adapte mal au handicap de certains utilisateurs.

Et, de plus, elle ne tient pas compte des contextes d'utilisation, notamment la mobilité du terminal, le fait qu'une conversation soit déjà en cours, etc. Or ces contextes d'utilisations auraient pu être indiqués par l'utilisateur ou être déduits de la configuration qu'il a réalisée sur son terminal (terminal en mode "Réunion", microphone désactivé, et.)

Plusieurs solutions existent aujourd'hui qui permettent d'indiquer à un terminal d'indiquer ses caractéristiques matérielles et logicielles à un service ou une application, de manière à ce que ce dernier adapte son contenu et/ou la présentation de son contenu au terminal considéré.

En particulier, les spécifications RFC 2534 de 1999 prévoient qu'un terminal puisse indiquer des informations décrivant ses capacités relatives à l'affichage, l'impression, et la réception de fax. Mais du fait de son ancienneté, elles ne sont plus adaptées à la complexité actuelle des applications et des terminaux.

Dans sa recommandation CP/PP1.0 du 15 janvier 2004 dont la version 2.0 est à l'état de document de travail, le consortium W3C (World Wide Web Consortium) établit une norme permettant à chaque terminal de décrire ses capacités. Il s'agit essentiellement des capacités relatives au matériel, au système d'exploitation, au navigateur Internet et éventuellement au type de connectivité réseau. L'objectif est de permettre à un serveur Web d'adapter le contenu délivré et sa mise en forme aux limitations du terminal. Cette recommandation s'appuie sur la norme RDF pour Resource Description Framework, basée sur le langage XML, pour décrire les capacités d'un terminal.

L'Alliance OMA (Open Mobile Alliance) a repris la recommandation du consortium W3C pour en préciser les modalités d'utilisation dans le cadre de terminaux mobiles. Ces modalités d'utilisation précisent essentiellement l'utilisation du profil composite de capacités/préférences CC/PP sur session selon le protocole WAP ou WSP (abréviation de WAP session protocol) et sur session selon le protocole http sans fil ou W-http (abréviation de WAP Wireless profiled http) dans un document validé sous le titre de User Agent Profile version 2.0.

La demande de brevet américaine US2006100881 décrit une interaction web multimodale sur un réseau sans fil. Les interactions web multimodales permettant à un utilisateur d'interagir avec une application Internet de plusieurs façons par exemple avec des entrées clavier, pavé numérique, souris, stylet ou voix. Le système client du terminal reçoit les entrées utilisateur, les interprète pour déterminer le mode d'interaction et produit une requête client correspondante à ce mode d'interaction. Le terminal envoie la requête client au serveur fournissant le service. Le mode d'interaction est donc sélectionné parmi les modes d'interactions disponibles sur le terminal en fonction de l'entrée utilisateur et ne tient pas compte des interactions prises en charge par le serveur.

La demande de brevet EP-A-1 724 984 décrit une négociation permettant à un fournisseur de services d'adapter le contenu et/ou la présentation du contenu au terminal dans lequel un terminal reçoit des « messages de capacité » permettant d'activer ou de désactiver certaines capacités ou fonction du terminal afin d'assurer une réception correcte d'un service.

Or, toutes ces solutions son essentiellement focalisées sur les capacités de restitutions passives des terminaux telles que les possibilités d'affichage, la présence de hauts parleurs, etc., et partiellement sur ses capacités à émettre des informations (textes, voix, etc.). Dans tous les cas, ces informations ont pour seul et unique objectif de permettre au serveur Web d'adapter le contenu délivré (Content Adaptation). Cette adaptation de contenu est alors réalisée soit par sélection d'un contenu présentant un format adapté (le même contenu étant disponible sous plusieurs formats), soit par formatage du contenu de manière différente suivant les capacités de restitutions et/ou d'émission indiquées, soit en transformant le contenu (notamment par réduction de résolution, transcodage, etc.).

Les interactions du terminal avec le service restent limitées soit, dans la première approche, à celle proposée par la solution d'interface propriétaire avec ses inconvénients, soit, dans la deuxième approche, aux interactions génériques.

Dans cette deuxième approche, les potentialités du terminal ne sont donc pas toutes exploitées car cette approche nivelle par le bas les interactions entre le terminal et les services menant au sous emploi des capacités d'interactions du terminal.

Un des buts de la présente invention est de remédier à des inconvénients/insuffisances de l'état de la technique/ d'apporter des améliorations par rapport à l'état de la technique.

Un objet de l'invention est un procédé de négociation pour la délivrance d'un service à un terminal comportant l'envoi , à partir de moyens de délivrance du service, audit terminal d'un ensemble de propositions d'interactions prises en charge par les moyens de délivrance lors de la délivrance dudit service, l'ensemble de propositions étant configuré pour permettre audit terminal d'indiquer audits moyens de délivrance dudit service que ledit terminal est apte à accepter au moins une proposition parmi l'ensemble de propositions d'interactions,
chaque proposition de l'ensemble décrivant une liste d'au moins deux stimuli pris en charge par les moyens de délivrance du service au terminal durant la session de service,
la liste d'au moins deux stimuli pour chaque proposition décrivant une liste de commandes d'interaction dont une commande d'interaction doit être transmise par le terminal au moyens de délivrance lorsque l'interaction correspondante est activée par l'utilisateur au moyen d'une interface d'interaction du terminal et
chaque liste de stimuli étant différente des listes de stimuli des autres propositions et correspondant à une configuration respective de l'interface d'interaction du terminal.

Ainsi, le service propose au terminal des alternatives en termes de modes d'interactions possibles. Le terminal pourra ainsi indiquer le(s) mode(s) d'interaction(s) correspondant à la meilleure utilisation possible de ses capacités, voire de choisir un mode d'interaction compatible avec le handicap de l'utilisateur dudit terminal.

Avantageusement, l'étape d'envoi d'un ensemble de propositions d'interactions est renouvelée durant une session dudit service.

Ainsi, si le service a subit une mise à jour de ses modes d'interactions et/ou le terminal de ses capacités d'interactions et/ou si l'utilisateur du terminal a changé durant la session, ces nouveaux éléments peuvent être pris en compte pour réadapter le mode d'interactions du terminal avec le service.

Un autre objet de l'invention est un programme comprenant des instructions de code de programme pour l'exécution des étapes du procédé de négociation lorsque ledit programme est exécuté par un processeur.

L'invention a pour objet un serveur délivrant un service à un terminal comportant des moyens d'envoi, à partir du serveur délivrant le service, audit terminal d'un ensemble de propositions d'interactions prises en charge par le serveur délivrant le service lors de la délivrance dudit service , l'ensemble de propositions étant configuré pour permettre audit terminal d'indiquer au serveur que ledit terminal est apte à accepter au moins une proposition parmi l'ensemble de propositions d'interactions,
chaque proposition de l'ensemble décrivant une liste d'au moins deux stimuli pris en charge par le serveur délivrant le service au terminal durant la session de service,
la liste d'au moins deux stimuli pour chaque proposition décrivant une liste de commandes d'interaction dont une commande d'interaction doit être transmise par le terminal au serveur délivrant le service lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

L'invention a aussi pour objet un procédé de configuration d'un terminal en vue de la délivrance d'un service comportant la réception, par le terminal, en provenance de moyens de délivrance du service, d'un ensemble de propositions d'interactions prises en charge par les moyens de délivrance lors de la délivrance dudit service , l'ensemble de propositions étant configuré pour permettre audit terminal d'indiquer audits moyens de délivrance dudit service que ledit terminal est apte à accepter au moins une proposition parmi l'ensemble de propositions d'interactions,
chaque proposition de l'ensemble décrivant une liste d'au moins deux stimuli pris en charge par le serveur délivrant le service au terminal durant la session de service,
la liste d'au moins deux stimuli pour chaque proposition décrivant une liste de commandes d'interaction dont une commande d'interaction doit être transmise par le terminal au serveur délivrant le service lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

Avantageusement, ledit procédé comporte le choix d'au moins une proposition parmi l'ensemble de propositions d'interactions en fonction de capacités dudit terminal.

Ainsi, le terminal pourra être configuré pour interagir au mieux avec le service en fonction de ses propres capacités.

Avantageusement, ledit procédé comporte le renouvellement de l'étape de réception d'un ensemble de propositions d'interactions apte à permettre audit terminal de modifier la au moins une proposition acceptée.

Avantageusement, au démarrage de l'utilisation par ledit terminal dudit service, ledit procédé comporte une configuration dudit terminal en fonction d'une des au moins une proposition acceptée.

Ainsi, le terminal spécialise son interface pour interagir avec le service le temps de l'utilisation de ce service par l'utilisateur du terminal. Le terminal adapte dynamiquement son interface au service en fonction de l'ensemble de proposition d'interaction proposée par le service.

L'invention a également pour objet un programme comprenant des instructions de code de programme pour l'exécution des étapes du procédé de configuration lorsque ledit programme est exécuté par un processeur.

Un objet de l'invention est un terminal comportant des moyens de réception, par le terminal, en provenance de moyens de délivrance du service, d'un ensemble de propositions d'interactions prises en charge par les moyens de délivrance lors de la délivrance d'un service, l'ensemble de propositions étant configuré pour permettre audit terminal d'indiquer audits moyens de délivrance dudit service que ledit terminal est apte à accepter au moins une proposition parmi l'ensemble de propositions d'interactions,
chaque proposition de l'ensemble décrivant une liste d'au moins deux stimuli pris en charge par le serveur délivrant le service au terminal durant la session de service,
la liste d'au moins deux stimuli pour chaque proposition décrivant une liste de commandes d'interaction dont une commande d'interaction doit être transmise par le terminal au serveur délivrant le service lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

Un autre objet de l'invention est un terminal comportant des moyens de délivrance d'un service et d'une interface permettant à un utilisateur dudit terminal d'interagir avec ledit service, lesdits moyens de délivrance dudit service comporte des moyens d'envoi, à partir des moyens de délivrance du service, à ladite interface d'un ensemble de propositions d'interactions prises en charge, lors de la délivrance dudit service, par lesdits moyens de délivrance dudit service, l'ensemble de propositions étant configuré pour permettre à ladite interface d'indiquer audit moyens de délivrance dudit service que ladite interface est apte à accepter au moins une proposition parmi l'ensemble de propositions d'interactions
chaque proposition de l'ensemble décrivant une liste d'au moins deux stimuli pris en charge par les moyens de délivrance du service au terminal durant la session de service,
la liste d'au moins deux stimuli pour chaque proposition décrivant une liste de commandes d'interaction dont une commande d'interaction doit être transmise par le terminal aux moyens de délivrance du service lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal

Les caractéristiques et avantages de l'invention apparaîtront plus clairement à la lecture de la description, faite à titre d'exemple, et des figures s'y rapportant qui représentent :
- Figure 1, des échanges ayant lieu durant le procédé de négociation selon l'invention,
- Figures 2a et 2b, des schémas d'exemples de propositions d'interactions, interactions respectivement par usage de touches et par utilisation d'un écran tactile,
- Figure 3, un schéma bloc d'un procédé de négociation selon l'invention,
- Figures 4a et 4b, des schémas d'exemples de terminaux configurés selon l'interaction proposée par respectivement les figures 2a et 2b pour la délivrance d'un service de messagerie,
- Figure 5, un schéma bloc d'un procédé de configuration selon l'invention,
- Figure 6, un schéma bloc d'une architecture mettant en oeuvre l'invention.

Les variantes de l'invention décrites ci après pourront être mise en œuvre seule ou en combinaison.

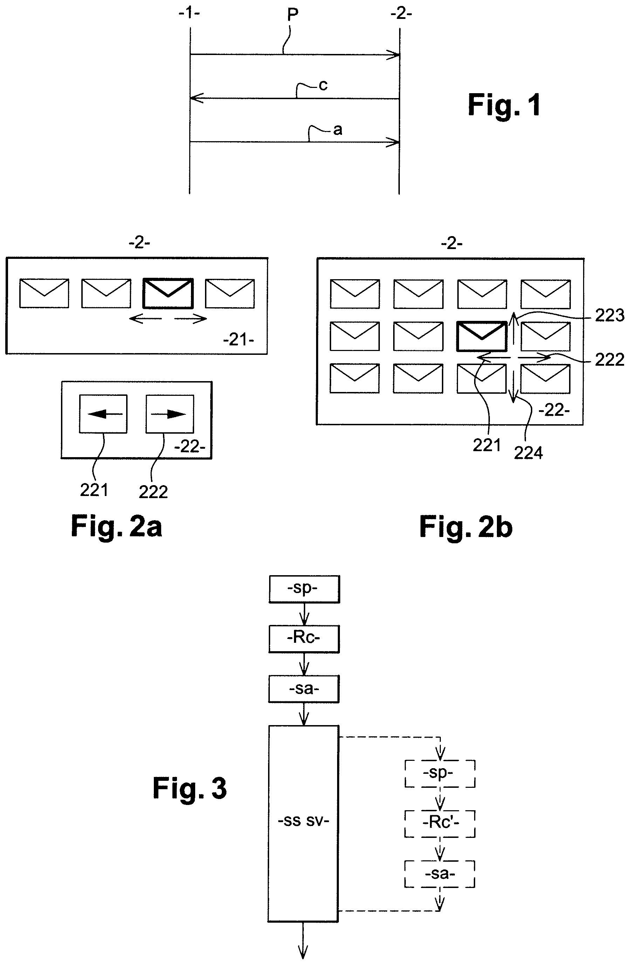

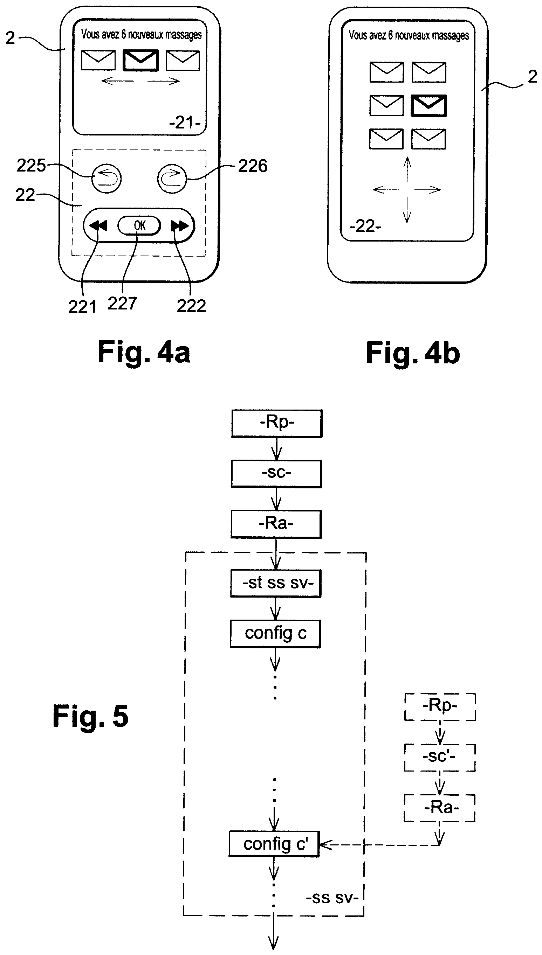

La figure 1 illustre les échanges ayant lieu durant le procédé de négociation illustré par la figure 4. L'objectif du procédé de négociation est d'abord de lister un ensemble de stimuli qui peuvent potentiellement être pris en charge par un terminal et des moyens de délivrance d'un service, encore appelé application cœur, durant la session de service.

Le terme "service" désigne à la fois le service délivré par l'application cœur et peut être utilisé par abus de langage pour désigner cette application cœur, c'est-à-dire les moyens de délivrance du service. Les moyens de délivrance d'un service peuvent être constitués par une entité logique qui délivre un service à l'utilisateur. Ces moyens de délivrance d'un service peuvent être locaux ou distants, cela signifie que les moyens de délivrance du service peuvent être respectivement localisés dans le terminal ou dans un serveur distant. C'est dans ces moyens de délivrance du service que sont traitées les demandes du terminal et que le contenu qui lui est destiné est préparé en fonction de ces demandes avant d'être transmis.

Le procédé de négociation comporte au moins un premier échange p des moyens de délivrance d'un service 1 vers le terminal 2. Dans cet échange, les moyens de délivrance d'un service1 formulent un ensemble de propositions d'interactions. Dans une variante de l'invention, les propositions sont hiérarchisées, notamment en fonction de la richesse d'interactions qu'elles offrent à l'utilisateur. Chaque proposition regroupe un ensemble d'interactions prises en charge par les moyens de délivrance du service. Par ensemble d'interactions est entendue au moins une interaction. Pour chaque interaction ou stimulus, l'ensemble de proposition d'interactions p envoyé par les moyens de délivrance d'un service1 comporte:
- une description de la commande d'interaction devant être envoyé par le terminal 2 aux moyens de délivrance d'un service 1 lorsque que l'interaction correspondante est activée par l'utilisateur,
- dans une variante de l'invention, le caractère obligatoire ou optionnel de l'interaction pour le service,
- le cas échant, toute autre information supplémentaire qui pourrait s'avérer utilise à l'utilisation du service (pouvant, par exemple, être utilisé pour renseigner l'utilisateur sur les moyens d'utiliser son termina pour accéder aux moyens de délivrance).

Le premier échange constitue donc une offre au terminal 2 de stimuli ou interactions pris en charge par les moyens de délivrance d'un service1.

Les tables ci après donnent un exemple d'un ensemble de propositions d'interactions qui peut être envoyé par des moyens de délivrance d'un service 1, notamment d'un service de messagerie vocale évoluée, vers un terminal 2 tel qu'un terminal mobile.

| **Proposition n° 1** | | | **Préf 9** |
|---|---|---|---|
| **Stimulus** | **Commande associée** | **O/F** | |
| * | DTMF " *" | O | |
| 1 | DTMF "1" | O | |
| 3 | DTMF "3" | O | |
| 5 | DTMF "5" | O | |

| **Proposition n° 2** | | | **Préf 2** |
|---|---|---|---|
| **Stimulus** | **Commande associée** | **O/F** | |
| Droite | Next | O | |
| Gauche | Back | O | |
| Valider | OK | O | |
| Retour | Upper-Menu | O | |
| C | Delete | F | |

| **Proposition n° 3** | | | **Préf 1** |
|---|---|---|---|
| **Stimulus** | **Commande associée** | **O/F** | |
| Déroule droite | Roll-Next | O | |
| Déroule gauche | Roll-Back | O | |
| Déroule haut | Roll-Up | O | |
| Déroule bas | Roll-Down | O | |
| Pointaqe | Position | O | |
| Sélection | Selection | F | |

Dans cet exemple, la première proposition est la moins recommandée par le fournisseur du service (Pref=9).

Les moyens de délivrance d'un service1 peuvent en informer le terminal en indiquant dans l'envoi d'un ensemble p de propositions d'interaction, une indication de préférence. Dans l'exemple ci-dessus, cette indication de préférence est donnée par un paramètre Préf variant de 1 à 10 de la proposition la plus intéressante à la moins intéressante d'après les moyens de délivrance du service. L'intérêt peut être une simple recommandation du fournisseur du service ou être estimé par les moyens de délivrance du service1. Cet intérêt est basé sur un ou plusieurs critères tels que la richesse de l'interaction, la généricité de la proposition d'interaction, etc.

La première proposition permet à l'utilisateur du terminal qui utilisera ce mode d'interactions d'interagir avec sa messagerie vocale uniquement en envoyant des fréquences vocales aux moyens de délivrance du service (touches DTMF). Cette proposition a l'avantage de permettre l'accès au service aux terminaux les moins évolués.

La deuxième proposition permet à l'utilisateur l'usage des touches "droit/gauche/valider/retour" du clavier 22 d'un terminal mobile 2 illustré par la figure 2a, et de manière optionnelle, à l'usage de la touche "annuler" (champ O/F positionné à "F"). Pour mettre en œuvre cette deuxième proposition d'interaction le terminal doit donc configurer ces touches pour que les commandes soient associées de manière adéquates pour permettre l'interaction avec les moyens de délivrance du service.

Dans le cas où le terminal 2 est configuré selon cette deuxième proposition pour interagir avec les moyens de délivrance du service 1 de messagerie vocale, les moyens de délivrance du service de messagerie vocale vont représenter, par exemple, sous forme d'une liste de message (ici des enveloppes fermées) qui sera affichée sur l'écran 21 du terminal mobile 2 et qui pourra être parcourue de droite à gauche (flèches sur l'écran 21). Les moyens de délivrance du service ne permettront pas de navigation "haut/bas" dans cette liste. Ainsi, un utilisateur qui connaît le terminal 2 utilisera intuitivement la touche gauche 221 et la touche droite 222 du clavier 22 du terminal mobile 2 pour naviguer dans la liste proposée par les moyens de délivrance du service.

La troisième proposition permet à l'utilisateur l'usage de l'écran tactile 22 de son terminal mobile 2 illustré par la figure 2b permettant de se déplacer dans toutes les directions (4 flèches de l'écran tactile 22), mais également de pointer un élément et, éventuellement, une sélection. Les moyens de délivrance du service de messagerie vocale pourront fournir les messages sous forme d'une mosaïque affichée par l'écran tactile 22 comme l'illustre la figure 2b que l'utilisateur du terminal mobile 2 pourra parcourir en tous sens. De façon optionnelle, la troisième proposition prévoit qu'une sélection d'un ensemble d'icones représentant les messages sur l'écran tactile 22 par l'utilisateur engendrera une commande de sélection des messages ainsi représentés, afin par exemple de mener une action commune sur ce groupe de messages (les effacer, les déplacer vers un répertoire, etc.).

Dans l'ensemble p des propositions d'interaction (illustré par les tables ci-dessus), le terminal 2 choisit une ou plusieurs propositions d'interactions et l'indique, via l'échange c, aux moyens de délivrance du service 1. La possibilité d'accepter plusieurs propositions à la fois permet au terminal 2 d'enrichir et de diversifier les modes d'interactions, et éventuellement de s'adapter à son utilisateur. Les moyens de délivrance du service 1 indiquent, le cas échant, les combinaisons de proposition acceptables, par exemple, dans un paramètre supplémentaire de l'ensemble p de propositions d'interactions.

L'indication c de choix de proposition (choix de stimuli pris en charge) peut être le fait que le terminal 2 ne supporte aucun des modes d'interactions proposés. Dans ce cas, l'indication c constitue une notification du fait que le terminal 2 ne remplit pas les pré-requis permettant l'utilisation du service délivré par les moyens de délivrance du service 1.

Dans une variante de l'invention, les moyens de délivrance du service 1 indiquent la prise en compte, via l'échange a, du choix du terminal 2. Ce message peut éventuellement être utilisé pour gérer certains voire tous les cas d'erreurs.

La figure 3 reprend le procédé de négociation mis en oeuvre notamment par les moyens de délivrance d'un service 1 ou des moyens de négociation collaborant avec ces moyens de délivrance du service 1. Le procédé comporte un envoie sp d'un ensemble de propositions d'interactions avec des moyens de délivrance d'un service 1. Suite à cet envoi, le procédé de négociation comporte, éventuellement, la réception rc par lesdits moyens de délivrance 1 dudit service d'une indication c que ledit terminal 2 accepte au moins une proposition parmi l'ensemble p de propositions d'interactions.

Dans une variante de l'invention, le procédé de négociation comporte l'envoie sa d'une confirmation des stimuli pris en charge par le terminal. Cette confirmation permet de s'assurer que le terminal 2 et les moyens de délivrance du service 1 vont bien utiliser les mêmes propositions d'interactions.

Dans une variante de l'invention, une session de service est ouverte ss sv et le procédé de négociation peut être renouvelé une ou plusieurs fois durant cette session de service comme le montre le procédé de négociation en tiret.

La figure 5 illustre un procédé de configuration d'un terminal 2. Ce procédé comporte la réception rp d'un ensemble de propositions d'interactions avec des moyens de délivrance d'un service 1. Suite à cet envoi, le procédé de configuration comporte, éventuellement, l'envoi sc audits moyens de délivrance 1 dudit service d'une indication c que ledit terminal 2 accepte au moins une proposition parmi l'ensemble p de propositions d'interactions.

Dans une variante de l'invention, le procédé de configuration comporte la réception ra par des moyens de délivrance d'une confirmation des stimuli pris en charge par le terminal 2.

Dans une variante de l'invention, le procédé de configuration comporte une configuration dynamique config c du terminal 2 et en particulier de ces moyens d'interactions ou interface d'interaction 22.

Pour réaliser à la fois la sélection dans l'ensemble p des propositions d'interactions et la configuration dynamique config c, un terminal 2 peut utiliser une plusieurs des méthodes suivantes prises seules ou en combinaison:
- une configuration par défaut listant les interactions supportées par le terminal et associant à chaque action d'un utilisateur sur ledit terminal (par exemple à chaque touche du terminal) une commande d'interaction ou stimulus. Cette configuration est, par exemple, notamment, réalisée par le constructeur du terminal et/ou le distributeur, etc. avec, éventuellement, des mises à jour par procédures de mises à jour informatique et électroniques classiques.

Ainsi, le choix d'une ou plusieurs propositions dans l'ensemble p de propositions d'interaction sera fonction de cette liste d'interactions supportées par le terminal.
- une configuration personnalisée, l'utilisateur du terminal définira ses préférences en termes d'interaction: quelle touche a quelle fonction, la préférence entre l'utilisation des commandes vocales ou du clavier, l'utilisation du clavier numérique, etc. Cette configuration pourra être définie par l'utilisateur via un assistant de démarrage ou la saisie de paramètres dans un menu de configuration, etc.

Ainsi, le choix d'une ou plusieurs propositions dans l'ensemble p de propositions d'interaction sera fonction des paramètres d'interactions définis par l'utilisateur et notamment de ses préférences.
- une configuration personnalisée propre au service, l'utilisateur du terminal définira ses préférences service par service (utile dans le cas des jeux par exemple).
- un profil activé sur le terminal. De ce profil, le terminal déduira un certain nombre de contraintes déterminantes dans le choix d'une ou plusieurs propositions dans l'ensemble p de propositions d'interaction. Par exemple, les profils type "En réunion", "En extérieur", etc. permettront par exemple au terminal de ne pas sélectionner les propositions d'interactions basées sur le mode vocal (l'utilisateur en réunion préférant plutôt intéragir par mode texte qu'en parlant par exemple).
Une fois une ou plusieurs proposition(s) retenue(s) et ce choix notifié sc, le terminal se configure dynamiquement en attribuant à chaque stimulus ou interaction une commande ou fonction du terminal.

Dans le cas du service de messagerie vocale de la figure 2a, la configuration dynamique du terminal 2 selon la deuxième proposition aboutit comme illustré par la figure 4a à un terminal 2 dont les touches permettent d'accéder aux fonctions de la messagerie. Les messages sont présentés de manière linéaire sur l'écran 21 du terminal car le terminal ne dispose pas de touches "haut et "bas". Les touches de l'interface d'interaction 22 du terminal 2 sont configuré comme suit: touche 221 permet l'accès au message précédent, touche 222 au message suivant, touche 227 permet l'ouverture du message, touche 225 permet le retour au menu principal, touche 226 permet d'effacer le message.

Dans le cas du service de messagerie vocale de la figure 2b, la configuration dynamique du terminal 2 selon la troisième proposition aboutit comme illustré par la figure 4b à un terminal 2 dont l'écran tactile 22 permet d'accéder aux fonctions de la messagerie. La navigation par toucher de l'écran 22 permet d'aller dans toutes les directions, les messages étant présentés sous forme tabulaire.

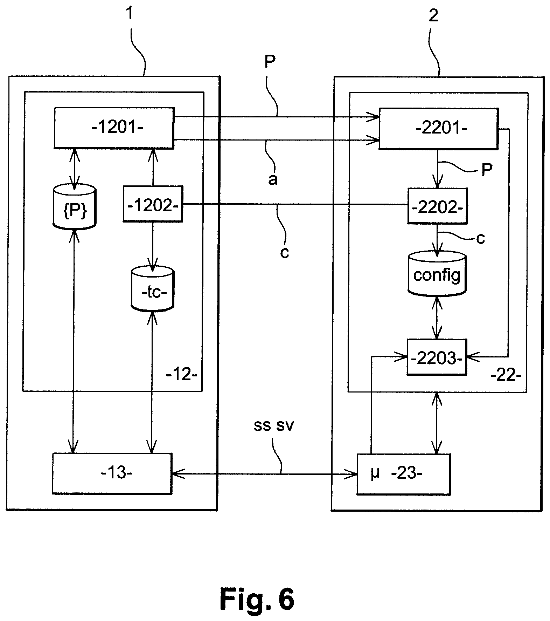

La figure 6 illustre une architecture mettant en oeuvre l'invention. Des moyens de délivrance d'un service 1 et en particulier des moyens d'émission 1201 de moyens de négociation 12 envoient un ensemble p de propositions d'interactions à un terminal 2, en particulier à une interface d'interactions 22. Des moyens de réception 2201 reçoivent cet ensemble p et des moyens de décisions 2202 acceptent une ou plusieurs des propositions en fonction de la configuration par défaut, de la configuration personnalisée, du profil, etc. Une indication d'acceptation d'une proposition c est reçue par les moyens de réception 1202 des moyens de négociation, qui confirme la proposition d'interactions acceptée par le terminal 2.

Lors de l'établissement d'une session du service correspondant ss sv par les moyens de traitement 13 des moyens de délivrance du service et les moyens de traitement 23 du terminal, les moyens de configuration du terminal 2203 configure de manière dynamique le terminal selon la ou les propositions d'interactions acceptées c.

Les moyens de délivrance d'un service 1 peuvent être distants d'un terminal notamment dans un serveur d'application, ou locaux, c'est-à-dire implémentés dans le terminal 2 (non illustré). La connectivité entre les moyens de délivrance du service et le terminal sont de tous types : filaire, radio, GSM, Bluetooth, Wifi, Ethernet, voire simple relation applicative entre deux composants logiciels, etc.

Dans une variante de l'invention, le procédé de configuration selon l'invention vient compléter les mécanismes existants permettant à un terminal de communiquer ses capacités de restitution de l'information (taille de l'écran, etc.) à un serveur d'application.

Dans une variante de l'invention, les moyens de délivrance du service 1 tirent partie des informations qui lui sont fournie par le procédé de négociation selon l'invention pour adapter la façon dont il interagit avec le terminal 2. Dans le cas d'architecture, telles que les architectures Web trois tiers par exemple, l'interaction sera, notamment, prise en charge par la couche "présentation". De cette façon, la couche "Logique de Service" encore appelée couche "applicative", permet de délivrer le service de manière agnositque au terminal ; la couche "présentation" prenant en charge l'interaction avec le terminal.

Dans certaines applications, des équipement peuvent jouer le rôle de relai, c'est-à-dire qu'ils implémentent à la fois le terminal 2 pour un premier service et les moyens de délivrance d'un deuxième service 1, tel qu'un récepteur de télévision qui joue à la fois le rôle de moyens de délivrance d'un deuxième service vis-à-vis de la télécommande et celui de terminal qui accède à un premier service : service de télévision localisé sur le réseau.

Grâce à l'invention, le développeur du service n'a pas à connaître au préalable les terminaux qui seront utilisés pour accéder à son service puisque le terminal et les moyens de délivrance du service dialogueront grâce au procédé de négociation permettant au terminal d'adapter dynamiquement sa configuration.

En outre, l'utilisateur pourra tirer le meilleur parti de son terminal en fonction des interfaces du terminal et de l'ensemble des propositions d'interaction des moyens de délivrance du service.

En personnalisant la configuration par rapport aux contraintes des utilisateurs: mobilité, réunion, handicap, l'interaction du terminal avec le service s'adaptera aussi à l'utilisateur du terminal et ce pour n'importe quel service.

Les services visés par l'invention correspondent à tout type d'usage (liste non exhaustives):
- accès à des services centralisés, tels que messagerie vocale, navigation internet, jeux en ligne, musique en ligne, Télévision en ligne, à partir de terminaux mobiles;
- utilisation d'une télécommande unique pour divers équipements domestiques, tels que la télévision, le récepteur TNT, le décodeur de télévision ou set top box, la chaîne hi-fi, un centre multimédia, etc.;
- utilisation de tout type de terminal (téléphone Bluetooth, manette de jeu aux fonctions avancées, etc.) comme télécommande d'équipement divers;
- utilisation de tout type de terminal pour jouer le rôle d'interface d'interaction avec des services variés: réglages sur une voiture, navigation GPS, etc.;
- utilisation de tout type de terminal pour jouer le rôle d'interface d'interaction avec des kiosques publics pour, notamment, l'achat de ticket de train, place de spectacles, ticket de métro, place de parking, réservation d'hôtel, de restaurant; etc.
- utilisation de la manette électronique d'un fauteuil roulant d'un utilisateur comme interface d'interaction avec un service quelconque.

Le procédé de négociation et le procédé de configuration constitue un protocole qui peut être implémenté sous la forme d'une interface de programme d'application ou API (Application Programming Interface) permettant aux moyens de délivrance de service de dialoguer avec le terminal sur lequel ils sont installés pour en découvrir les capacités d'interactions. Par exemple, pour le téléchargement d'application sur téléphones mobiles, chaque application embarque cette API qui lui permette d'échanger avec le mobile pour savoir quels stimuli il peut prendre en charge. Ainsi, l'application peut supporter un nombre importants de mobiles sans avoir à les connaître tous.

## Revendications

1. Procédé de négociation pour la délivrance d'un service à un terminal comportant
• l'envoi (sp), à partir de moyens de délivrance du service, audit terminal d'un ensemble de propositions d'interactions prises en charge par les moyens de délivrance lors de la délivrance dudit service, l'ensemble de propositions étant configuré pour permettre audit terminal d'indiquer audits moyens de délivrance dudit service que ledit terminal est apte à accepter au moins une proposition parmi l'ensemble de propositions d'interactions,
chaque proposition de l'ensemble décrivant une liste d'au moins deux stimuli pris en charge par les moyens de délivrance du service au terminal durant la session de service,
la liste d'au moins deux stimuli pour chaque proposition décrivant une liste de commandes d'interaction dont une commande d'interaction doit être transmise par le terminal au moyens de délivrance lorsque l'interaction correspondante est activée par l'utilisateur au moyen d'une interface d'interaction du terminal et
chaque liste de stimuli étant différente des listes de stimuli des autres propositions et correspondant à une configuration respective de l'interface d'interaction du terminal.

2. Procédé de négociation selon la revendication précédente **caractérisé en ce que** l'étape d'envoi (sp) d'un ensemble de propositions d'interactions est renouvelé durant une session dudit service.

3. Programme comprenant des instructions de code de programme pour l'exécution des étapes du procédé de négociation selon l'une quelconques des revendications précédentes lorsque ledit programme est exécuté par un processeur.

4. Serveur délivrant un service à un terminal comportant :
• des moyens d'envoi (1201) , à partir du serveur délivrant le service (1), audit terminal d'un ensemble de propositions d'interactions prises en charge par le serveur délivrant le service lors de la délivrance dudit service, l'ensemble de propositions étant configuré pour permettre audit terminal d'indiquer au serveur que ledit terminal est apte à accepter au moins une proposition parmi l'ensemble de propositions d'interactions,
chaque proposition de l'ensemble décrivant une liste d'au moins deux stimuli pris en charge par le serveur délivrant le service au terminal durant la session de service,
la liste d'au moins deux stimuli pour chaque proposition décrivant une liste de commandes d'interaction dont une commande d'interaction doit être transmise par le terminal au serveur délivrant le service lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

5. Procédé de configuration d'un terminal en vue de la délivrance d'un service comportant :
• la réception (rp), par le terminal, en provenance de moyens de délivrance du service, d'un ensemble de propositions d'interactions prises en charge par les moyens de délivrance lors de la délivrance dudit service, l'ensemble de propositions étant configuré pour permettre audit terminal d'indiquer audits moyens de délivrance dudit service que ledit terminal est apte à accepter au moins une proposition parmi l'ensemble de propositions d'interactions,
chaque proposition de l'ensemble décrivant une liste d'au moins deux stimuli pris en charge par les moyens de délivrance du service au terminal durant la session de service,
la liste d'au moins deux stimuli pour chaque proposition décrivant une liste de commandes d'interaction dont une commande d'interaction doit être transmise par le terminal au moyens de délivrance lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

6. Procédé de configuration selon la revendication précédente **caractérisé en ce que** ledit procédé comporte le choix (sc) d'au moins une proposition parmi l'ensemble de propositions d'interactions en fonction de capacités dudit terminal.

7. Procédé de configuration selon l'une quelconques des revendications 5 ou 6 **caractérisé en ce que** ledit procédé comporte le renouvellement de l'étape de réception (rp) d'un ensemble de propositions d'interactions apte à permettre audit terminal de modifier la au moins une proposition acceptée.

8. Procédé de configuration selon l'une quelconques des revendications 5 à 7 **caractérisé en ce que**, au démarrage (st ss sv) de l'utilisation par ledit terminal dudit service, ledit procédé comporte une configuration (config c) dudit terminal en fonction d'une des au moins une proposition acceptée.

9. Programme comprenant des instructions de code de programme pour l'exécution des étapes du procédé de configuration selon l'une quelconques des revendications 5 à 8 lorsque ledit programme est exécuté par un processeur compris dans un terminal.

10. Terminal comportant :
• des moyens de réception (2201), par le terminal, en provenance de moyens de délivrance du service, d'un ensemble de propositions d'interactions prises en charge par les moyens de délivrance lors de la délivrance d'un service, l'ensemble de propositions étant configuré pour permettre audit terminal d'indiquer audits moyens de délivrance dudit service que ledit terminal (2) est apte à accepter au moins une proposition parmi l'ensemble de propositions d'interactions,
chaque proposition de l'ensemble décrivant une liste d'au moins deux stimuli pris en charge par les moyens de délivrance du service au terminal durant la session de service,
la liste d'au moins deux stimuli pour chaque proposition décrivant une liste de commandes d'interaction dont une commande d'interaction doit être transmise par le terminal au moyens de délivrance lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

11. Terminal comportant des moyens de délivrance d'un service (1) et d'une interface (22) permettant à un utilisateur dudit terminal (2) d'interagir avec lesdits moyens de délivrance du service (1), lesdits moyens de délivrance dudit service (1) comporte des moyens d'envoi (1201), à partir des moyens de délivrance du service (1), à ladite interface (22) d'un ensemble de propositions d'interactions prises en charge, lors de la délivrance dudit service, par lesdits moyens de délivrance dudit service, l'ensemble de propositions étant configuré pour permettre à ladite interface (22) d'indiquer audit moyens de délivrance dudit service que ladite interface est apte à accepter au moins une proposition parmi l'ensemble de propositions d'interactions chaque proposition de l'ensemble décrivant une liste d'au moins deux stimuli pris en charge par les moyens de délivrance du service au terminal durant la session de service,
la liste d'au moins deux stimuli pour chaque proposition décrivant une liste de commandes d'interaction dont une commande d'interaction doit être transmise par le terminal aux moyens de délivrance du service lorsque les interactions correspondantes sont activées par l'utilisateur au moyen d'une interface d'interaction du terminal et
chaque liste de stimuli étant différente des listes de stimuli des autres propositions et correspondant à une configuration respective de l'interface d'interaction du terminal.

## Patentansprüche

1. Aushandlungsverfahren zur Bereitstellung eines Dienstes für ein Endgerät, umfassend:
• das Senden (sp), von Mitteln zur Bereitstellung des Dienstes aus an das Endgerät, einer Menge von Angeboten von Interaktionen, die von den Bereitstellungsmitteln bei der Bereitstellung des Dienstes unterstützt werden, wobei die Menge von Angeboten dafür ausgelegt ist, dem Endgerät zu ermöglichen, den Mitteln zur Bereitstellung des Dienstes anzuzeigen, dass das Endgerät in der Lage ist, wenigstens ein Angebot aus der Menge von Angeboten von Interaktionen anzunehmen,
wobei jedes Angebot der Menge eine Liste von wenigstens zwei Stimuli beschreibt, die von den Mitteln zur Bereitstellung des Dienstes für das Endgerät während der Dienstsitzung unterstützt werden,
wobei die Liste von wenigstens zwei Stimuli für jedes Angebot eine Liste von Interaktionsbefehlen beschreibt, von denen ein Interaktionsbefehl durch das Endgerät an die Bereitstellungsmittel übertragen werden muss, wenn die entsprechende Interaktion durch den Benutzer mittels einer Interaktionsschnittstelle des Endgerätes aktiviert wird, und
wobei jede Liste von Stimuli von den Listen von Stimuli der anderen Angebote verschieden ist und einer jeweiligen Konfiguration der Interaktionsschnittstelle des Endgerätes entspricht.

2. Aushandlungsverfahren nach dem vorhergehenden Anspruch, **dadurch gekennzeichnet, dass** der Schritt des Sendens (sp) einer Menge von Angeboten von Interaktionen während einer Sitzung des Dienstes wiederholt wird.

3. Programm, welches Programmcodeanweisungen zur Ausführung der Schritte des Aushandlungsverfahrens nach einem der vorhergehenden Ansprüche, wenn das Programm von einem Prozessor ausgeführt wird, umfasst.

4. Server, welcher einen Dienst für ein Endgerät bereitstellt und aufweist:
• Mittel zum Senden (1201), von dem den Dienst bereitstellenden Server (1) an das Endgerät, einer Menge von Angeboten von Interaktionen, die von dem den Dienst bereitstellenden Server bei der Bereitstellung des Dienstes unterstützt werden, wobei die Menge von Angeboten dafür ausgelegt ist, dem Endgerät zu ermöglichen, dem Server anzuzeigen, dass das Endgerät in der Lage ist, wenigstens ein Angebot aus der Menge von Angeboten von Interaktionen anzunehmen, wobei jedes Angebot der Menge eine Liste von wenigstens zwei Stimuli beschreibt, die von dem den Dienst für das Endgerät bereitstellenden Server während der Dienstsitzung unterstützt werden,
wobei die Liste von wenigstens zwei Stimuli für jedes Angebot eine Liste von Interaktionsbefehlen beschreibt, von denen ein Interaktionsbefehl durch das Endgerät an den den Dienst bereitstellenden Server übertragen werden muss, wenn die entsprechenden Interaktionen durch den Benutzer mittels einer Interaktionsschnittstelle des Endgerätes aktiviert werden, und
wobei jede Liste von Stimuli von den Listen von Stimuli der anderen Angebote verschieden ist und einer jeweiligen Konfiguration der Interaktionsschnittstelle des Endgerätes entspricht.

5. Verfahren zur Konfiguration eines Endgerätes im Hinblick auf die Bereitstellung eines Dienstes, umfassend:
• dem Empfang (rp), durch das Endgerät von Mitteln zur Bereitstellung des Dienstes, einer Menge von Angeboten von Interaktionen, die von den Bereitstellungsmitteln bei der Bereitstellung des Dienstes unterstützt werden, wobei die Menge von Angeboten dafür ausgelegt ist, dem Endgerät zu ermöglichen, den Mitteln zur Bereitstellung des Dienstes anzuzeigen, dass das Endgerät in der Lage ist, wenigstens ein Angebot aus der Menge von Angeboten von Interaktionen anzunehmen,
wobei jedes Angebot der Menge eine Liste von wenigstens zwei Stimuli beschreibt, die von den Mitteln zur Bereitstellung des Dienstes für das Endgerät während der Dienstsitzung unterstützt werden,
wobei die Liste von wenigstens zwei Stimuli für jedes Angebot eine Liste von Interaktionsbefehlen beschreibt, von denen ein Interaktionsbefehl durch das Endgerät an die Bereitstellungsmittel übertragen werden muss, wenn die entsprechenden Interaktionen durch den Benutzer mittels einer Interaktionsschnittstelle des Endgerätes aktiviert werden, und
wobei jede Liste von Stimuli von den Listen von Stimuli der anderen Angebote verschieden ist und einer jeweiligen Konfiguration der Interaktionsschnittstelle des Endgerätes entspricht.

6. Konfigurationsverfahren nach dem vorhergehenden Anspruch, **dadurch gekennzeichnet, dass** das Verfahren die Wahl (sc) wenigstens eines Angebotes aus der Menge von Angeboten von Interaktionen in Abhängigkeit von den Fähigkeiten des Endgerätes umfasst.

7. Konfigurationsverfahren nach einem der Ansprüche 5 oder 6, **dadurch gekennzeichnet, dass** das Verfahren die Wiederholung des Schrittes des Empfangs (rp) einer Menge von Angeboten von Interaktionen umfasst, die geeignet ist, dem Endgerät zu ermöglichen, das wenigstens eine angenommene Angebot zu ändern.

8. Konfigurationsverfahren nach einem der Ansprüche 5 bis 7, **dadurch gekennzeichnet, dass** zu Beginn (st ss sv) der Nutzung des Dienstes durch das Endgerät das Verfahren eine Konfiguration (config c) des Endgerätes in Abhängigkeit von einem des wenigstens einen angenommenen Angebotes umfasst.

9. Programm, welches Programmcodeanweisungen zur Ausführung der Schritte des Konfigurationsverfahren nach einem der Ansprüche 5 bis 8, wenn das Programm von einem in einem Endgerät enthaltenen Prozessor ausgeführt wird, umfasst.

10. Endgerät, welches aufweist:
• Mittel zum Empfang (2201), durch das Endgerät von Mitteln zur Bereitstellung des Dienstes, einer Menge von Angeboten von Interaktionen, die von den Bereitstellungsmitteln bei der Bereitstellung eines Dienstes unterstützt werden, wobei die Menge von Angeboten dafür ausgelegt ist, dem Endgerät zu ermöglichen, den Mitteln zur Bereitstellung des Dienstes anzuzeigen, dass das Endgerät (2) in der Lage ist, wenigstens ein Angebot aus der Menge von Angeboten von Interaktionen anzunehmen,
wobei jedes Angebot der Menge eine Liste von wenigstens zwei Stimuli beschreibt, die von den Mitteln zur Bereitstellung des Dienstes für das Endgerät während der Dienstsitzung unterstützt werden,
wobei die Liste von wenigstens zwei Stimuli für jedes Angebot eine Liste von Interaktionsbefehlen beschreibt, von denen ein Interaktionsbefehl durch das Endgerät an die Bereitstellungsmittel übertragen werden muss, wenn die entsprechenden Interaktionen durch den Benutzer mittels einer Interaktionsschnittstelle des Endgerätes aktiviert werden, und
wobei jede Liste von Stimuli von den Listen von Stimuli der anderen Angebote verschieden ist und einer jeweiligen Konfiguration der Interaktionsschnittstelle des Endgerätes entspricht.

11. Endgerät, welches Mittel zur Bereitstellung eines Dienstes (1) und einer Schnittstelle (22), die einem Benutzer des Endgerätes (2) ermöglicht, mit den Mitteln zur Bereitstellung des Dienstes (1) zu interagieren, aufweist, wobei die Mittel zur Bereitstellung des Dienstes (1) Mittel zum Senden (1201), von den Mitteln zur Bereitstellung des Dienstes (1) an die Schnittstelle (22), einer Menge von Angeboten von Interaktionen, die bei der Bereitstellung des Dienstes von den Mitteln zur Bereitstellung des Dienstes unterstützt werden, aufweisen, wobei die Menge von Angeboten dafür ausgelegt ist, der Schnittstelle (22) zu ermöglichen, den Mitteln zur Bereitstellung des Dienstes anzuzeigen, dass die Schnittstelle in der Lage ist, wenigstens ein Angebot aus der Menge von Angeboten von Interaktionen anzunehmen,
wobei jedes Angebot der Menge eine Liste von wenigstens zwei Stimuli beschreibt, die von den Mitteln zur Bereitstellung des Dienstes für das Endgerät während der Dienstsitzung unterstützt werden,
wobei die Liste von wenigstens zwei Stimuli für jedes Angebot eine Liste von Interaktionsbefehlen beschreibt, von denen ein Interaktionsbefehl durch das Endgerät an die Mittel zur Bereitstellung des Dienstes übertragen werden muss, wenn die entsprechenden Interaktionen durch den Benutzer mittels einer Interaktionsschnittstelle des Endgerätes aktiviert werden, und
wobei jede Liste von Stimuli von den Listen von Stimuli der anderen Angebote verschieden ist und einer jeweiligen Konfiguration der Interaktionsschnittstelle des Endgerätes entspricht.

## Claims

1. Negotiation method for the delivery of a service to a terminal, comprising
• sending (sp), from means for delivering the service to said terminal, a set of interaction propositions managed by the delivery means when said service is delivered, the set of propositions being configured so as to allow said terminal to indicate to said means for delivering said service that said terminal is able to accept at least one proposition from among the set of interaction propositions,
each proposition of the set describing a list of at least two stimuli managed by the means for delivering the service to the terminal during the service session,
the list of at least two stimuli for each proposition describing a list of interaction commands, one interaction command of which has to be transmitted by the terminal to the delivery means when the corresponding interaction is activated by the user by way of an interaction interface of the terminal, and
each list of stimuli being different from the lists of stimuli of the other propositions and corresponding to a respective configuration of the interaction interface of the terminal.

2. Negotiation method according to the preceding claim, **characterized in that** the step of sending (sp) a set of interaction propositions is repeated during a session of said service.

3. Program comprising program code instructions for executing the steps of the negotiation method according to either one of the preceding claims when said program is executed by a processor.

4. Server delivering a service to a terminal, comprising:
• sending means (1201) for sending, from the server delivering the service (1) to said terminal, a set of interaction propositions managed by the server delivering the service when said service is delivered, the set of propositions being configured so as to allow said terminal to indicate to the server that said terminal is able to accept at least one proposition from among the set of interaction propositions,
each proposition of the set describing a list of at least two stimuli managed by the server delivering the service to the terminal during the service session,
the list of at least two stimuli for each proposition describing a list of interaction commands, one interaction command of which has to be transmitted by the terminal to the server delivering the service when the corresponding interactions are activated by the user by way of an interaction interface of the terminal, and
each list of stimuli being different from the lists of stimuli of the other propositions and corresponding to a respective configuration of the interaction interface of the terminal.

5. Method for configuring a terminal for the purpose of delivering a service, comprising:
• reception (rp), by the terminal from means for delivering the service, of a set of interaction propositions managed by the delivery means when said service is delivered, the set of propositions being configured so as to allow said terminal to indicate to said means for delivering said service that said terminal is able to accept at least one proposition from among the set of interaction propositions,
each proposition of the set describing a list of at least two stimuli managed by the means for delivering the service to the terminal during the service session,
the list of at least two stimuli for each proposition describing a list of interaction commands, one interaction command of which has to be transmitted by the terminal to the delivery means when the corresponding interactions are activated by the user by way of an interaction interface of the terminal, and
each list of stimuli being different from the lists of stimuli of the other propositions and corresponding to a respective configuration of the interaction interface of the terminal.

6. Configuration method according to the preceding claim, **characterized in that** said method comprises choosing (sc) at least one proposition from among the set of interaction propositions on the basis of the capabilities of said terminal.

7. Configuration method according to either one of Claims 5 and 6, **characterized in that** said method comprises repeating the step of receiving (rp) a set of interaction propositions able to allow said terminal to modify the at least one accepted proposition.

8. Configuration method according to any one of Claims 5 to 7, **characterized in that**, when said terminal starts (st ss sv) to use said service, said method comprises configuring (config c) said terminal on the basis of one of the at least one accepted propositions.

9. Program comprising program code instructions for executing the steps of the configuration method according to any one of Claims 5 to 8 when said program is executed by a processor contained in a terminal.

10. Terminal comprising:
• reception means (2201) for the reception, by the terminal from means for delivering the service, of a set of interaction propositions managed by the delivery means when a service is delivered, the set of propositions being configured so as to allow said terminal to indicate to said means for delivering said service that said terminal (2) is able to accept at least one proposition from among the set of interaction propositions,
each proposition of the set describing a list of at least two stimuli managed by the means for delivering the service to the terminal during the service session,
the list of at least two stimuli for each proposition describing a list of interaction commands, one interaction command of which has to be transmitted by the terminal to the delivery means when the corresponding interactions are activated by the user by way of an interaction interface of the terminal, and
each list of stimuli being different from the lists of stimuli of the other propositions and corresponding to a respective configuration of the interaction interface of the terminal.

11. Terminal comprising means for delivering a service (1) and an interface (22) allowing a user of said terminal (2) to interact with said means for delivering the service (1), said means for delivering said service (1) comprise sending means (1201) for sending, from the means for delivering the service (1) to said interface (22), a set of interaction propositions managed by said means for delivering said service when said service is delivered, the set of propositions being configured so as to allow said interface (22) to indicate to said means for delivering said service that said interface is able to accept at least one proposition from among the set of interaction propositions,
each proposition of the set describing a list of at least two stimuli managed by the means for delivering the service to the terminal during the service session, the list of at least two stimuli for each proposition describing a list of interaction commands, one interaction command of which has to be transmitted by the terminal to the means for delivering the service when the corresponding interactions are activated by the user by way of an interaction interface of the terminal, and
each list of stimuli being different from the lists of stimuli of the other propositions and corresponding to a respective configuration of the interaction interface of the terminal.
